(19) Europäisches Patentamt
European Patent Office
Office européen des brevets

(11) EP 4 737 278 A1

# (12) EUROPEAN PATENT APPLICATION

(43) Date of publication:
**06.05.2026 Bulletin 2026/19**

(21) Application number: **25207180.8**

(22) Date of filing: **07.10.2025**

(51) International Patent Classification (IPC):
***B62J 1/00*** *(2006.01)* ***B29C 64/00*** *(2017.01)*
***B33Y 80/00*** *(2015.01)*

(52) Cooperative Patent Classification (CPC):
**B62J 1/005; B29C 64/00; B33Y 80/00; B62J 1/007**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.10.2024 CN 202411523848**

(71) Applicant: **Amplifi Tech (Xiamen) Limited**
**Xiamen Fujian (CN)**

(72) Inventors:
- **LI, Hsin Tzu**
  **Taoyuan City, Taiwan, 333 (CN)**
- **KAO, Wei Chun**
  **Taoyuan City, Taiwan, 333 (CN)**

(74) Representative: **Goddar, Heinz J.**
**Boehmert & Boehmert**
**Anwaltspartnerschaft mbB**
**Pettenkoferstrasse 22**
**80336 München (DE)**

## (54) 3D-PRINTED BICYCLE SADDLE

(57) The present disclosure relates to a 3D-printed bicycle saddle including a shell and an elastic pad disposed on the shell, wherein the elastic pad has a 3D-printed lattice structure including a sit bone section, and unit cells of the sit bone section are porous gyroid cells. The compressive stress (σ) and the compressive strain (ε) of the sit bone section meet the following relationships: $0\ \text{MPa} \leq \sigma \leq 0.23\ \text{MPa}$ while $0 \leq \varepsilon \leq 0.2$; $0.1\ \text{MPa} \leq \sigma \leq 0.35\ \text{MPa}$ while $0.2 \leq \varepsilon \leq 0.6$; and $0.15\ \text{MPa} \leq \sigma \leq 0.45\ \text{MPa}$ while $0.6 \leq \varepsilon \leq 0.65$.

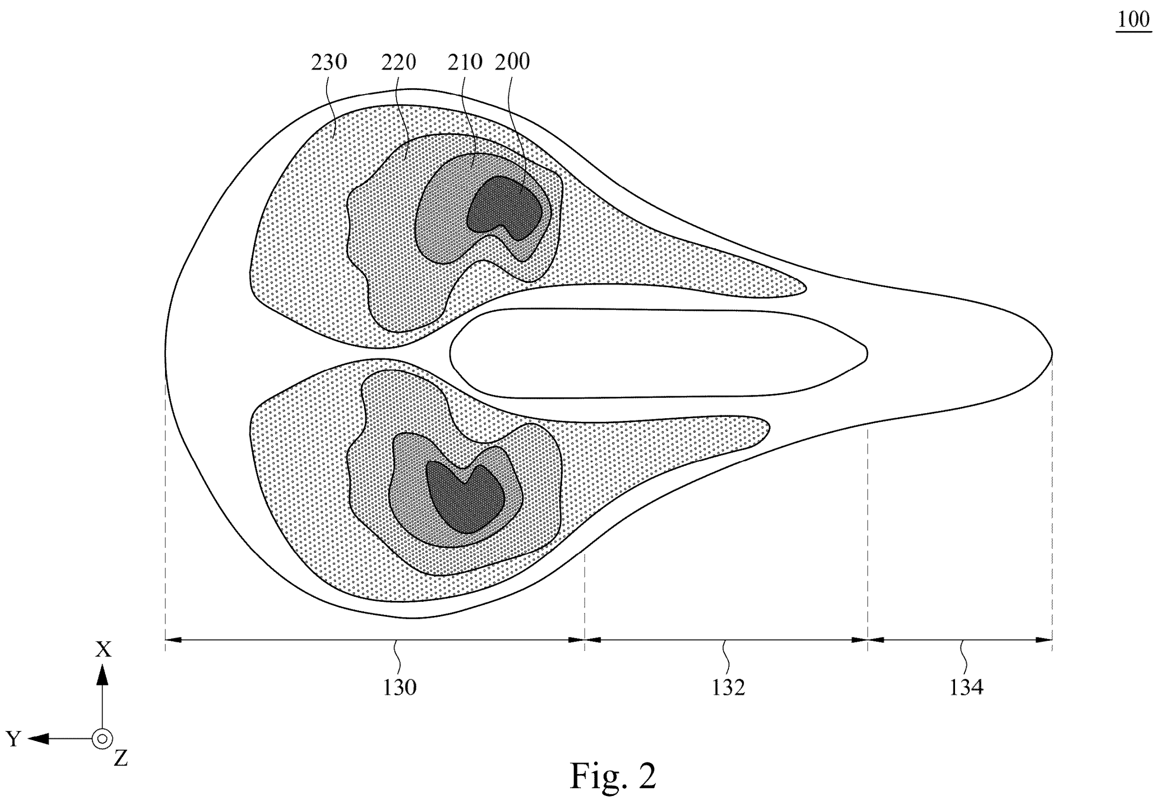


Fig. 2



Processed by Luminess, 75001 PARIS (FR)

## Description

### [CROSS-REFERENCE TO RELATED APPLICATION]

This application claims priority to China Patent Application 202411523848.2, filed October 29, 2024, which is incorporated herein by reference.

### [FIELD OF DISCLOSURE]

The present disclosure relates to bicycle saddles, particularly to a 3D-printed bicycle saddle.

### [DESCRIPTION OF RELATED ART]

Three-dimensional (3D) printing, also known as additive manufacturing (AM), is an automated process that builds designated three-dimensional objects by stacking layers of materials. For example, a 3D-printed lattice structure is applied to form an elastic pad of the bicycle saddle by controlling the lattice parameters. Generally, a lattice structure that is softer and easier to deform can reduce the rider's feeling of roughness while riding. However, a softer lattice structure is prone to insufficient supporting capability, which may cause the saddle to collapse. As a result, the rider will experience a pronounced bottoming feeling, which reduces the comfort of riding.

### [SUMMARY]

The embodiments of the present disclosure provide a 3D-printed bicycle saddle, wherein the 3D-printed lattice structure defines the compressive stress ranges according to different compressive strain regions, thus improving the comfort of sitting on the bicycle saddle.

According to several embodiments of the present disclosure, a 3D-printed bicycle saddle comprises a shell and an elastic pad disposed on the shell, wherein the elastic pad has a 3D-printed lattice structure. The 3D-printed lattice structure comprises a sit bone section, and lattice unit cells of the sit bone section are porous gyroid cells. The compressive stress ($\sigma$) and the compressive strain ($\varepsilon$) of the sit bone section meet the following relationships: 0 MPa $\leq \sigma \leq$ 0.23 MPa while $0 \leq \varepsilon \leq 0.2$; 0.1 MPa $\leq \sigma \leq$ 0.35 MPa while $0.2 \leq \varepsilon \leq 0.6$; and 0.15 MPa $\leq \sigma \leq$ 0.45 MPa while $0.6 \leq \varepsilon \leq 0.65$.

In several embodiments, the curved-surface thickness (t) and the unit cell side length (L) of the lattice unit cells of the sit bone section meet the following relationship: $0.06 < \frac{t}{L} < 0.12$.

In several embodiments, the variation curve ($\varepsilon$, $\sigma$) of the compressive stress ($\sigma$) and the compressive strain ($\varepsilon$) of the sit bone section has a first slope while the compressive strain ($\varepsilon$) is less than 0.2 and has a second slope while the compressive strain ($\varepsilon$) is greater than 0.2 and less than 0.6, wherein the second slope is less than the first slope.

In several embodiments, the variation curve ($\varepsilon$, $\sigma$) of the compressive stress ($\sigma$) and the compressive strain ($\varepsilon$) of the sit bone section exhibits the near-linear elastic relationship while the compressive strain ($\varepsilon$) is less than or equal to 0.2.

In several embodiments, the variation curve ($\varepsilon$, $\sigma$) of the compressive stress ($\sigma$) and the compressive strain ($\varepsilon$) of the sit bone section exhibits the near-flat plateau relationship while the compressive strain ($\varepsilon$) is greater than or equal to 0.2 and less than or equal to 0.6.

In several embodiments, the variation curve ($\varepsilon$, $\sigma$) of the compressive stress ($\sigma$) and the compressive strain ($\varepsilon$) of the sit bone section exhibits the densification relationship while the compressive strain ($\varepsilon$) is greater than 0.65.

In several embodiments, the elastic pad comprises a bottom surface facing the shell and a top surface facing away from the bottom surface. The unit lattice side length of the lattice unit cells of the sit bone section is less than or equal to the thickness from the bottom surface to the top surface.

In several embodiments, the thickness from the bottom surface to the top surface of the elastic pad is greater than or equal to 1 cm.

In several embodiments, the 3D-printed lattice structure further comprises a nose section and a middle section that is located between the nose section and the sit bone section, wherein, at the same compressive stress, the compressive strain of the sit bone section is less than or equal to a compressive strain of the middle section and a compressive strain of the nose section.

In several embodiments, the lattice unit cells of the middle section or the nose section are porous gyroid cells, and the ratio of the curved-surface thickness to the unit cell side length of the lattice unit cells in the sit bone section is greater than or equal to the ratio of the curved-surface thickness to the unit cell side length of the lattice unit cells in the middle section or the nose section.

According to the aforementioned embodiments, the 3D-printed bicycle saddle of the present disclosure comprises an elastic pad having a 3D-printed lattice structure, wherein the sit bone section of the 3D-printed lattice structure has porous gyroid cells, and the sit bone section exhibits corresponding compressive stresses in multiple compressive strain ranges. Thus the 3D-printed bicycle saddle of the present disclosure can enhance the comfort of riding on the 3D-printed bicycle saddle.

**[BRIEF DESCRIPTION OF THE DRAWINGS]**

To better understand the embodiments of the present disclosure, relevant diagrams are provided along with the following descriptions. Please note that, according to industrial standard forms of description, the dimensions of every component in the diagrams are not drawn according to the actual scale. For explanatory purposes, the feature, size, ratio, and configuration of components may be increased or decreased.

Fig. 1 is a three-dimensional schematic diagram of a 3D-printed bicycle saddle according to several embodiments of the present disclosure.
Fig. 2 is a top-view diagram of a 3D-printed bicycle saddle according to several embodiments of the present disclosure.
Fig. 3 is a variation curve graph of the compressive stress and the compressive strain of the elastic pad according to several embodiments of the present disclosure.
Fig. 4 is an enlarged schematic diagram of a 3D-printed lattice structure according to several embodiments of the present disclosure.
Fig. 5 and Fig. 6 are three-dimensional schematic diagrams of porous gyroid cells according to several embodiments of the present disclosure, respectively.
Fig. 7 is a variation curve graph of the compressive stress and the compressive strain of the elastic pad according to several embodiments of the present disclosure.

**[DETAILED DESCRIPTION]**

To address different features of the object, several embodiments and examples are provided in the present disclosure. The following examples practically describe the components and configurations of the present disclosure in a simplified manner. These are for the purpose of clear illustration and shall not be interpreted as limiting the scope, applicability, or configuration of the present disclosure in any way. In the description of features of a component, for example, "a first feature formed above or on a second feature" may include embodiments having the first feature and the second feature configured in direct contact with each other, and embodiments may include having an additional feature configured in between the first feature and the second feature, so that the first feature and the second feature are not directly in contact. Furthermore, the reference numbers and/or symbols and letters are reused multiple times in the embodiments and examples of the present disclosure. Such duplication is for the purpose of simplicity and clarification, without necessarily implying a relationship among the presented embodiments and/or configurations.

Furthermore, opposite and relative spatial terms, such as "underneath", "under", "lower", "on", and "upper", are used in this specification to describe relations of a component (or feature) with another component (or another feature) in the figure. In addition to the orientations illustrated in the figures, the purpose of opposite/relative spatial terms is to cover components of different orientations in use or during operations. Orientations of devices can be defined in terms of other expressions (rotating 90 degrees or in other directions), as well as relative expressions/symbols in describing the spatial orientation/position for component operation.

The present disclosure provides a 3D-printed bicycle saddle, including an elastic pad that has a 3D-printed lattice structure, wherein the sit bone section of the 3D-printed lattice structure has porous gyroid cells as the lattice unit cells, and the sit bone section has corresponding compressive stresses in multiple compressive strain ranges, thus enhancing the comfort of riding of the 3D-printed bicycle saddle.

Fig. 1 is a three-dimensional schematic diagram of a 3D-printed bicycle saddle 100 according to several embodiments of the present disclosure. The 3D-printed bicycle saddle 100 comprises a shell 110 and an elastic pad 120. The shell 110 includes relatively stiffer materials, for example, metal or carbon fibers, to be used as the main supporting structure of the 3D-printed bicycle saddle 100. The elastic pad 120 is disposed on the shell 110 and includes elastic materials, for example, thermoplastic rubber or thermoplastic polyurethane. Therefore, the elastic pad 120 has the characteristics of high resilience, wear-resistance, and vibration reduction. The elastic pad 120 comprises a bottom surface 120b facing the shell 110, and a top surface 120t facing away from the bottom surface 120b, wherein the bottom surface 120b can be fixed to the shell 110 through retaining methods such as adhesive bonding or screw fastening. In several embodiments, the other side of the shell 110, opposite to the elastic pad 120, comprises a pair of rails 112 for mounting the 3D-printed bicycle saddle 100 onto the bicycle seatpost.

The elastic pad 120 is formed as an integral structure by 3D printing, wherein the elastic pad 120 comprises a right half pad 122, a left half pad 124, and a connecting portion 126 located between the right half pad 122 and the left half pad 124. The right half pad 122 and the left half pad 124 have a 3D-printed lattice structure, respectively, thus improving the elasticity and the supporting capability of the elastic pad 120. The connecting portion 126 physically connects the right half pad 122 and the left half pad 124, so that the elastic pad 120 has a structure symmetric about the Y-axis. In several embodiments, the top surfaces of the right half pad 122 and the left half pad 124, respectively, are higher than the top surface of the connecting portion 126, making the connecting portion 126 appear as a recessed area relative to the top surface 120t of the elastic pad 120. Therefore, the right half pad 122 and the left half pad 124 become the main areas to bear the weight of the rider.

More specifically, the 3D-printed lattice structures of the right half pad 122 and the left half pad 124 include a sit bone section 130, a middle section 132, and a nose section 134 that are arranged along the Y-axis direction, wherein the middle section 132 is located between the sit bone section 130 and the nose section 134. The 3D-printed lattice structure is composed of a plurality of lattice unit cells, wherein the lattice unit cells of the sit bone section 130, the middle section 132, and the nose section 134 can be the same or different. For example, since the sit bone section 130 is the section that bears most of the weight of the rider among these three sections, porous gyroid cells with a high strength-to-weight ratio and a high surface-to-volume ratio are selected as the lattice unit cells of the sit bone section 130 to enhance the supporting capability of the sit bone section 130 while making the sit bone section 130 a lightweight component. For the middle section 132 and the nose section 134, other relatively soft lattice structures can be selected as the lattice unit cells in order to reduce the pressure on the rider from the middle section 132 and the nose section 134.

The sit bone section 130 is the main weight-bearing area for the elastic pad 120, while the sit bone section 130 is also the area where the rider feels the most pressure. Fig. 2 is a top view diagram of a 3D-printed bicycle saddle 100 according to several embodiments of the present disclosure, for describing the pressure distribution of the 3D-printed bicycle saddle 100 when loaded with weight. When riding on the 3D-printed bicycle saddle 100, the pressure felt by the rider can be divided into a pressure area 200, a pressure area 210 surrounding the pressure area 200, a pressure area 220 surrounding the pressure area 210, and a pressure area 230 surrounding the pressure area 220, wherein the pressure fed back to the rider decreases sequentially from the pressure area 200 to the pressure area 230. As shown in Fig. 2, the pressure area 200, the pressure area 210, and the pressure area 220 are mainly distributed within the sit bone section 130, whereas the pressure area 230 extends from the sit bone section 130 to the middle section 132. In other words, most of the pressure experienced by the rider originates from the sit bone section 130, and the rider experiences little to no pressure from the nose section 134.

Since the most pressure while riding on the 3D-printed bicycle saddle 100 comes from the area of the sit bone section 130, the comfort of riding on the 3D-printed bicycle saddle 100 can be determined by the hardness feeling and the bottoming feeling of the sit bone section 130. When a light to moderate load is applied to the sit bone section 130, the comfort of riding is mainly determined by the perceived hardness of the sit bone section 130, which varies with compressive displacement. When a heavy load is applied to the sit bone section 130, the rider may experience a pronounced bottoming feeling due to structural collapse of the sit bone section 130. If the sit bone section 130 provides a soft hardness response under light to medium loads (that is, small compressive force) and a mild bottoming feeling under heavy loads (that is, large compressive force), such a sit bone section 130 can significant improve the comfort of riding on the 3D-printed bicycle saddle 100.

To better clarify the ideal hardness feeling and the bottoming feeling for the sit bone section 130, please refer to Fig. 3, which is a variation curve graph of the compressive stress (σ) and the compressive strain (ε) of the elastic pad 120 according to several embodiments of the present disclosure. More specifically, compressive strain is the ratio $(\frac{\Delta h}{h_0})$ of the elastic pad deformation under compressive stress ($\Delta h$) to the original thickness of the elastic pad ($h_0$) 120. Compressive stress is the ratio $(\frac{F}{A})$ of the compressive force applied to the elastic pad (F) 120 to the area about which the compressive force is distributed (A). As the compressive stress applied to the elastic pad 120 continuously increases, the compressive strain of the elastic pad 120 also changes accordingly. Therefore, a variation curve graph (ε, σ) of the compressive strain (ε) as the X-axis, and the compressive stress (σ) as the Y-axis can be produced.

When porous gyroid cells are selected as the lattice unit cells of the sit bone section 130, as shown in Fig. 1, the compressive stress-strain variation curve of the sit bone section 130 is illustrated as the curve 310 in Fig. 3. The curve 310 can generally be divided into three stages. When the compressive strain is less than or equal to 0.2, the curve 310 exhibits a near-linear elastic relationship, indicating that the compressive strain steadily increases as the compressive stress increases, and the sit bone section 130 exhibits a high elastic state. When the compressive strain is greater than or equal to 0.2 and less than or equal to 0.6, the curve 310 exhibits a near-flat plateau relationship with a slope smaller than the slope of the near-linear elastic relationship, indicating that a small scale of compressive stress creates a large scale of compressive strain in return, and the sit bone section 130 has a relatively large compressive displacement. When the compressive strain is greater than 0.65, the curve 310 exhibits a densification relationship, indicating that a small scale of compressive strain causes a dramatic increase of compressive stress, and the sit bone section 130 provides a pronounced bottoming feeling due to structural collapse.

When the sit bone section 130 has appropriate compressive strains under different compressive stresses, the sit bone section 130 can give both the soft hardness response and a mild bottoming feeling, thus improving the comfort of riding on the sit bone section 130. When porous gyroid cells are selected as the lattice unit cells of the sit bone section 130, the compressive strain of the sit bone section 130 can be divided into three regions according to the characteristics of three stages of the compressive stress-strain variation curve (for example, curve 310), and appropriate compressive stresses are assigned to each region. More specifically, when the compressive strain is between 0 and 0.2, the compressive stress of the sit bone section 130 will be within the range of 0 megapascal (MPa) and 0.23 MPa; when the compressive strain is between 0.2 and 0.6, the compressive stress of the sit bone section 130 will be within the range of 0.1 MPa and 0.35 MPa; when the compressive strain is between 0.6 and 0.65, the compressive stress of the sit bone section 130 will be within the range of 0.15 MPa and 0.45 MPa. In other words, the compressive stress ($\sigma$) and the compressive strain ($\varepsilon$) of the sit bone section 130 meet the following relationships: 0 MPa $\leq \sigma \leq$ 0.23 MPa under $0 \leq \varepsilon \leq 0.2$; 0.1 MPa $\leq \sigma \leq$ 0.35 MPa under $0.2 \leq \varepsilon \leq 0.6$; and 0.15 MPa $\leq \sigma \leq$ 0.45 MPa under $0.6 \leq \varepsilon \leq 0.65$.

Correspondingly, the compressive stress-strain variation curve of the sit bone section 130 will fall within the designated region of Fig. 3, in order to control the compressive strain under the corresponding compressive stress of the sit bone section 130 within a suitable range. In Fig. 3, region 300a represents a condition of having the compressive strain from 0 to 0.2 and the compressive stress from 0 MPa to 0.23 MPa, region 300b represents a condition of having the compressive strain from 0.2 to 0.6 and the compressive stress from 0.1 MPa to 0.35 MPa, and region 300c represents a condition of having the compressive strain from 0.6 to 0.65 and the compressive stress from 0.15 MPa to 0.45 MPa. When the sit bone section 130 compressive stress-strain variation curve of the sit bone section 130 (for example, curve 310) completely falls within the region 300a to the region 300c under the compressive strain from 0 to 0.65, the sit bone section 130 can give both the soft hardness feeling and the mild bottoming feeling.

Fig. 3 further marks a curve 320 representing a hard saddle and a curve 330 representing a soft saddle for explaining the reasons why the curve 310 representing the 3D-printed lattice structure is suitable for the sit bone section 130 of Fig. 1. When the rider weighs about 80 kg, the maximum compressive stress of the saddle is about 0.2 MPa. When the compressive stress reaches 0.2 MPa, the compressive strain of the curve 310 is about 0.43 and has not yet entered its densification region, such that the rider will experience a hardness feeling that is neither too soft nor too hard, without a significant bottoming feeling. Therefore, the configuration is suitable for the sit bone section 130. When the compressive stress reaches 0.2 MPa, the compressive strain of the curve 320 is about 0.15. With such a small amount of compression, the rider will readily perceive the hardness of the saddle. When the compressive stress reaches 0.2 MPa, the compressive strain of the curve 330 is about 0.8 and has entered its densification region. Therefore, the rider will experience a pronounced bottoming feeling. According to Fig. 3, the curve 320 and the curve 330 are not completely in the region 300a to the region 300c, which further illustrates that the porous gyroid lattice structure, corresponding to the variation curve in the region 300a to the region 300c, is suitable for the sit bone section 130.

Fig. 4 is an enlarged schematic diagram of a 3D-printed lattice structure 400 according to several embodiments of the present disclosure, wherein the lattice unit cells 410 of the 3D-printed lattice structure 400 are porous gyroid cells. When the porous gyroid cells have a proper curved-surface thickness and a suitable unit cell side length, the relationship of the compressive stress and the compressive strain of the 3D-printed lattice structure 400 can meet the requirement of the sit bone section of Fig. 1. More specifically, the curved-surface thickness (t) and the unit cell side length (L) of the porous gyroid cells meet the following relationship: $0.06 < \frac{t}{L} < 0.12$. If the ratio of the curved-surface thickness and the unit cell side length is greater than or equal to 0.12, the porous gyroid cells likely occupy a large portion of the unit cell volume, resulting in the 3D-printed lattice structure with excessive hardness. If the ratio of the curved-surface thickness and the unit cell side length is less than or equal to 0.6, the porous gyroid cells are likely too soft, resulting in the 3D-printed lattice structure tending to produce a pronounced bottoming feeling.

Fig. 5 and Fig. 6 are three-dimensional schematic diagrams of porous gyroid cells, wherein Fig. 5 illustrates the lattice unit cells 410 of Fig. 4, while Fig. 6 illustrates the lattice unit cells 420 of several other embodiments of the present disclosure. The lattice unit cell 410 has a curved-surface thickness t1 and a unit cell side length L1, while the lattice unit cell 420 has a curved-surface thickness t2 and a unit cell side length L2. The curved-surface thickness t1 is less than the curved-surface thickness t2, and the unit cell side length L1 is equal to the unit cell side length L2, making the ratio of the curved-surface thickness to the unit cell side length $(\frac{t2}{L2})$ of the lattice unit cells 420 be greater than the ratio of the curved-surface thickness to the unit cell side length $(\frac{t1}{L1})$ of the lattice unit cells 410. When the aforementioned ratios of lattice unit cells 410 and lattice unit cells 420 are greater than 0.06 and less than 0.12, both the lattice unit cells 410 and the lattice unit cells 420 are suitable for the 3D-printed lattice structure of the sit bone section. However, when the lattice unit cells 420 are selected, the sit bone section will exhibit relatively high hardness and supporting capability.

Please refer to Fig. 1 again. The middle section 132 and the nose section 134 may also employ porous gyroid cells, or may employ other lattice shapes different from those of the sit bone section 130, such as body-centered cubic cells or face-centered cubic cells. In the embodiments where the middle section 132 or the nose section 134 comprises porous gyroid cells, the ratio of the curved-surface thickness to the unit cell side length for the sit bone section 130 is greater than or equal to the ratio for the curved-surface thickness to the unit cell side length of the middle section 132 or the nose section 134. For example, the lattice unit cells 420 in Fig. 6 can be selected for the sit bone section 130, whereas the lattice unit cells 410 of Fig. 5 can be selected for the middle section 132 and the nose section 134. Therefore, at the same compressive stresses, the compressive strain of the sit bone section 130 is less than or equal to the compressive strain of the middle section 132 and the compressive strain of the nose section 134, so that the pressure posed on the rider by the middle section 132 and the nose section 134 can be reduced, increasing the comfort of riding.

In several embodiments, the thickness from the bottom surface 120b to the top surface 120t of the elastic pad 120 is greater than or equal to 1 cm, so that the 3D-printed lattice structure has sufficient space for compression in coping with the weight of the rider. For example, the thickness of the elastic pad 120 can be within 1 cm to 30 cm, 1 cm to 20 cm, or 1 cm to 10 cm. In such embodiments, the unit cell side length of the sit bone section 130 is less than or equal to the thickness of the elastic pad 120, so that the sit bone section 130 is composed of at least one layer of complete porous gyroid cells.

In the following descriptions, various measurements and assessments of the 3D-printed bicycle saddle of the present disclosure will be disclosed to provide more specific details on features and effects of the present disclosure.

In one Experiment, assessments were conducted focusing on the impact of the porous gyroid cells on the comfort of the 3D-printed lattice structure. More specifically, 3D-printed lattice structures were produced using the same elastic materials for the comparative examples and embodiments, wherein the thickness of the 3D-printed lattice structure is 10 mm, the length and width thereof are 60 mm respectively, and the lattice unit cells of the 3D-printed lattice structure are porous gyroid cells, with all three unit cell side lengths being 10 mm respectively. The ratio of the curved-surface thickness (t) to the side length (L) of lattice unit cells of each comparative example and embodiment $(\frac{t}{L})$ is different from each other, as shown in Table 1.

Table 1

| | Ratio of the curved-surface thickness to the unit cell side length |
|---|---|
| Comparative Example 1 | 0.05 |
| Comparative Example 2 | 0.06 |
| Embodiment 1 | 0.07 |
| Embodiment 2 | 0.08 |
| Embodiment 3 | 0.09 |
| Embodiment 4 | 0.10 |
| Embodiment 5 | 0.11 |
| Comparative Example 3 | 0.12 |
| Comparative Example 4 | 0.13 |

Next, a material testing machine equipped with a force sensor was used to conduct uniaxial compression tests on the 3D-printed lattice structure in each comparative example and embodiment. More specifically, the hydraulic pressuring cylinder of the material testing machine, with a 30 mm diameter, applied compression with a downward pressing speed of 5 mm/minute in all comparative examples and embodiments. The force sensor measured the compressive force corresponding to a compressive displacement during the compression process. By applying the measurements and the following Formula (I) and Formula (II), the corresponding compressive stress and compressive strain can be calculated, and the compressive stress-compressive strain variation curves were plotted. Results of data plotting are shown in Fig. 7.

$$\text{Compressive Stress } (\sigma) = \text{Compressive Force}(F) / \text{Force-applied Area } (A) \text{ of the Test Piece} \quad \cdots \text{ Formula (I)}$$

$$\text{Compressive Strain } (\varepsilon) = \text{Compressive Displacement } (\Delta h) / \text{Original Height } (h_0) \text{ of the Test Piece} \quad \cdots \text{ Formula (II)}$$

In addition, the region 300a to region 300c of Fig. 7 are in reference to the region 300a to the region 300c of Fig. 3. In other words, when the variation curve falls within the region 300a to the region 300c of Fig. 7, the 3D-printed lattice structure corresponding to the variation curve is suitable for the sit bone section 130. According to Fig. 7, when the compressive strain is 0 to 0.65, the variation curves of Embodiment 1 to Embodiment 5 completely fall within the region 300a to the region 300c, indicating that when the ratio of the curved-surface thickness to the unit cell side length is greater than 0.06 and less than 0.12, the 3D-printed lattice structure meets the desired hardness and comfort requirements of the sit bone section 130.

When the compressive strain is between 0 to 0.65, the variation curves of Comparative Example 1 to Comparative Example 2 do not completely fall within the region 300a to the region 300c, and portions of the variation curves lie below region 300a to the region 300c, indicating that when the ratio of the curved-surface thickness to the unit cell side length is less than or equal to 0.06, the 3D-printed lattice structure becomes softer, resulting in the 3D-printed lattice structure being able to withstand only a relatively small compressive stress and being prone to a pronounced bottoming feeling. The variation curves of Comparative Example 3 to Comparative Example 4 do not completely fall within the region 300a to the region 300c, and portions of the variation curves lie above the region 300a to the region 300c, indicating that when the ratio of the curved-surface thickness to the unit cell side length is greater than or equal to 0.12, the 3D-printed lattice structure becomes stiffer, resulting in the 3D-printed lattice structure exhibiting a stronger hardness feeling.

According to the aforementioned embodiments, the 3D-printed bicycle saddle of the present disclosure comprises a shell and an elastic pad disposed on the shell, wherein the elastic pad has a 3D-printed lattice structure that comprises a sit bone section, and the lattice unit cells of the sit bone section are porous gyroid cells of high support capability. When the compressive strain of the sit bone section is 0 to 0.2, 0.2 to 0.6, and 0.6 to 0.65, it corresponds to different ranges of compressive stress, respectively. Therefore, the hardness feeling and the bottoming feeling experienced by the rider can be reduced, and the comfort of riding on the 3D-printed bicycle saddle can be enhanced.

Features of the above embodiment example are presented to help those skilled in the art better understand the viewpoint of the present disclosure. Those skilled in the art shall acknowledge that they may easily apply the present disclosure as the basis to design or modify other processes or structures, to facilitate the same goal and/or advantages identical to that of the introduced embodiment. Those skilled in the art shall also acknowledge that such equal structure does not depart from the spirit and scope of the present disclosure, where the designs can be modified, replaced, or changed without departing from the spirit and scope of the present disclosure.

**[COMPONENT SYMBOL]**

100: 3D-printed bicycle saddle
110: shell
112: rail
120: elastic pad
120b: bottom surface
120t: top surface
122: right half pad
124: left half pad
126: connecting portion
130: sit bone section
132: middle section
134: nose section
200, 210, 220, 230: pressure area
300a, 300b, 300c: region
310, 320, 330: curve
400: 3D-printed lattice structure
410, 420: lattice unit cell
L1, L2: unit cell side length
t1, t2: thickness
X, Y, Z: axis

## Claims

1. A three-dimensional printed (3D-printed) bicycle saddle, comprising a shell; and

   an elastic pad disposed on the shell,
   wherein the elastic pad has a 3D-printed lattice structure, the 3D-printed lattice structure comprises a sit bone section, and a plurality of first lattice unit cells of the sit bone section are first porous gyroid cells,
   wherein a compressive stress ($\sigma$) and a compressive strain ($\varepsilon$) of the sit bone section meet the following relationships:

   $0 \text{ MPa} \le \sigma \le 0.23 \text{ MPa}$ while $0 \le \varepsilon \le 0.2$;
   $0.1 \text{ MPa} \le \sigma \le 0.35 \text{ MPa}$ while $0.2 \le \varepsilon \le 0.6$; and
   $0.15 \text{ MPa} \le \sigma \le 0.45 \text{ MPa}$ while $0.6 \le \varepsilon \le 0.65$.

2. The 3D-printed bicycle saddle of Claim 1, wherein a curved-surface thickness (t) and a unit cell side length (L) of the plurality of first lattice unit cells of the sit bone section meet the following relationship: $0.06 < \frac{t}{L} < 0.12$ .

3. The 3D-printed bicycle saddle of Claim 1, wherein a variation curve ($\varepsilon$, $\sigma$) of the compressive stress ($\sigma$) and the compressive strain ($\varepsilon$) of the sit bone section has a first slope while the compressive strain is less than 0.2, and has a second slope while the compressive strain is greater than 0.2 and less than 0.6, wherein the second slope is less than the first slope.

4. The 3D-printed bicycle saddle of Claim 1, wherein a variation curve ($\varepsilon$, $\sigma$) of the compressive stress ($\sigma$) and the compressive strain ($\varepsilon$) of the sit bone section exhibits a near-linear elastic relationship while the compressive strain is less than or equal to 0.2.

5. The 3D-printed bicycle saddle of Claim 1, wherein a variation curve ($\varepsilon$, $\sigma$) of the compressive stress ($\sigma$) and the compressive strain ($\varepsilon$) of the sit bone section exhibits a near-flat plateau relationship while the compressive strain is greater than or equal to 0.2 and less than or equal to 0.6.

6. The 3D-printed bicycle saddle of Claim 1, wherein a variation curve ($\varepsilon$, $\sigma$) of the compressive stress ($\sigma$) and the compressive strain ($\varepsilon$) of the sit bone section exhibits a densification relationship while the compressive strain is greater than 0.65.

7. The 3D-printed bicycle saddle of Claim 1, wherein the elastic pad comprises a bottom surface facing the shell and a top surface facing away from the bottom surface, and a unit lattice side length of each of the plurality of first lattice unit cells of the sit bone section is less than or equal to a thickness from the bottom surface to the top surface.

8. The 3D-printed bicycle saddle of Claim 7, wherein the thickness from the bottom surface to the top surface of the elastic pad is greater than or equal to 1 cm.

9. The 3D-printed bicycle saddle of Claim 1, wherein the 3D-printed lattice structure further comprises:

   a nose section; and
   a middle section located between the nose section and the sit bone section, wherein, at a same compressive stress, the compressive strain of the sit bone section is less than or equal to a compressive strain of the middle section and a compressive strain of the nose section.

10. The 3D-printed bicycle saddle of Claim 9, wherein a second lattice unit cell of the middle section or the nose section is a second porous gyroid cell, and a ratio of a curved-surface thickness to a unit cell side length of each of the plurality of first lattice unit cells in the sit bone section is greater than or equal to a ratio of the curved-surface thickness to a unit cell side length of the second lattice unit cell in the middle section or the nose section.

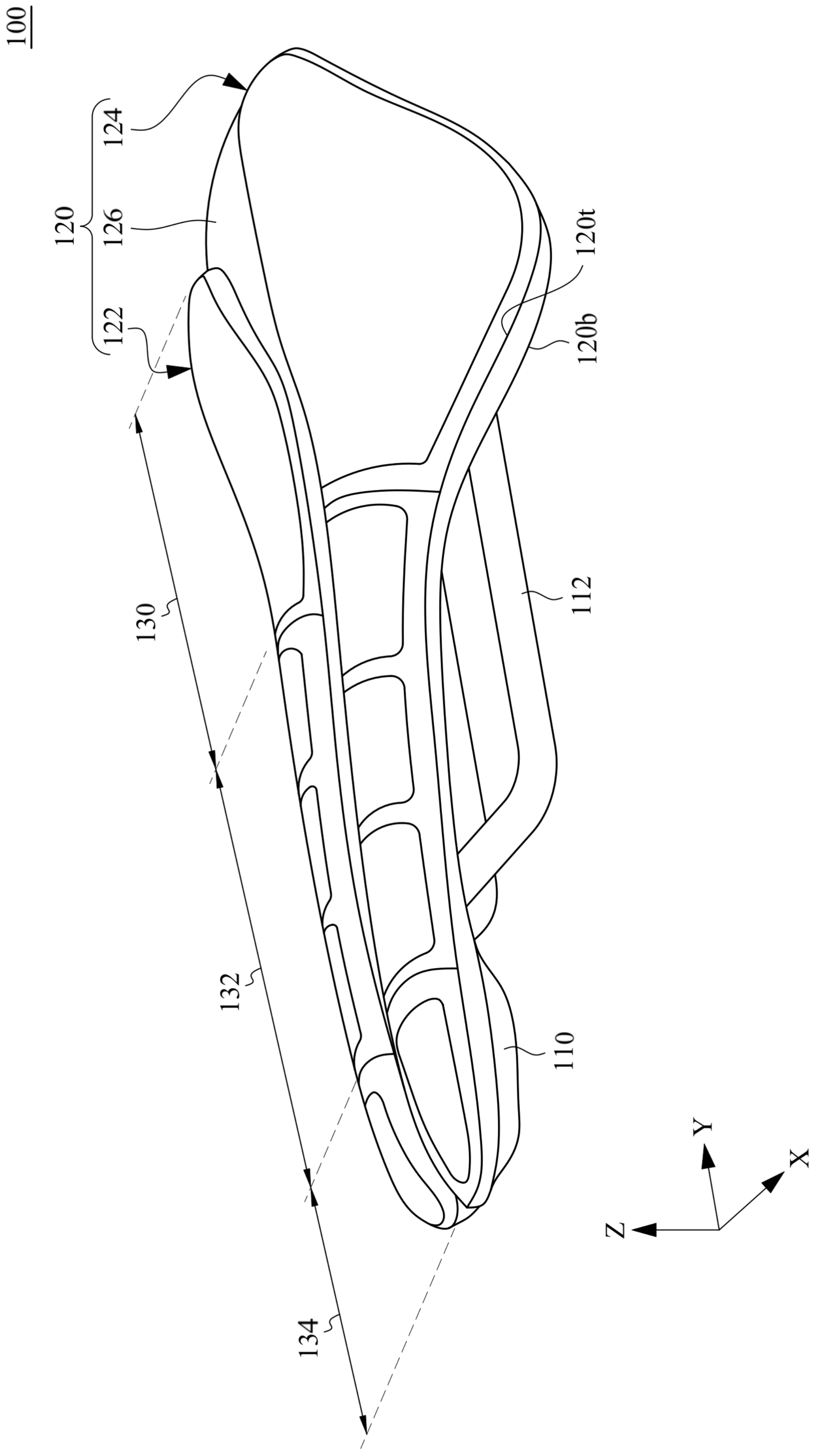


Fig. 1

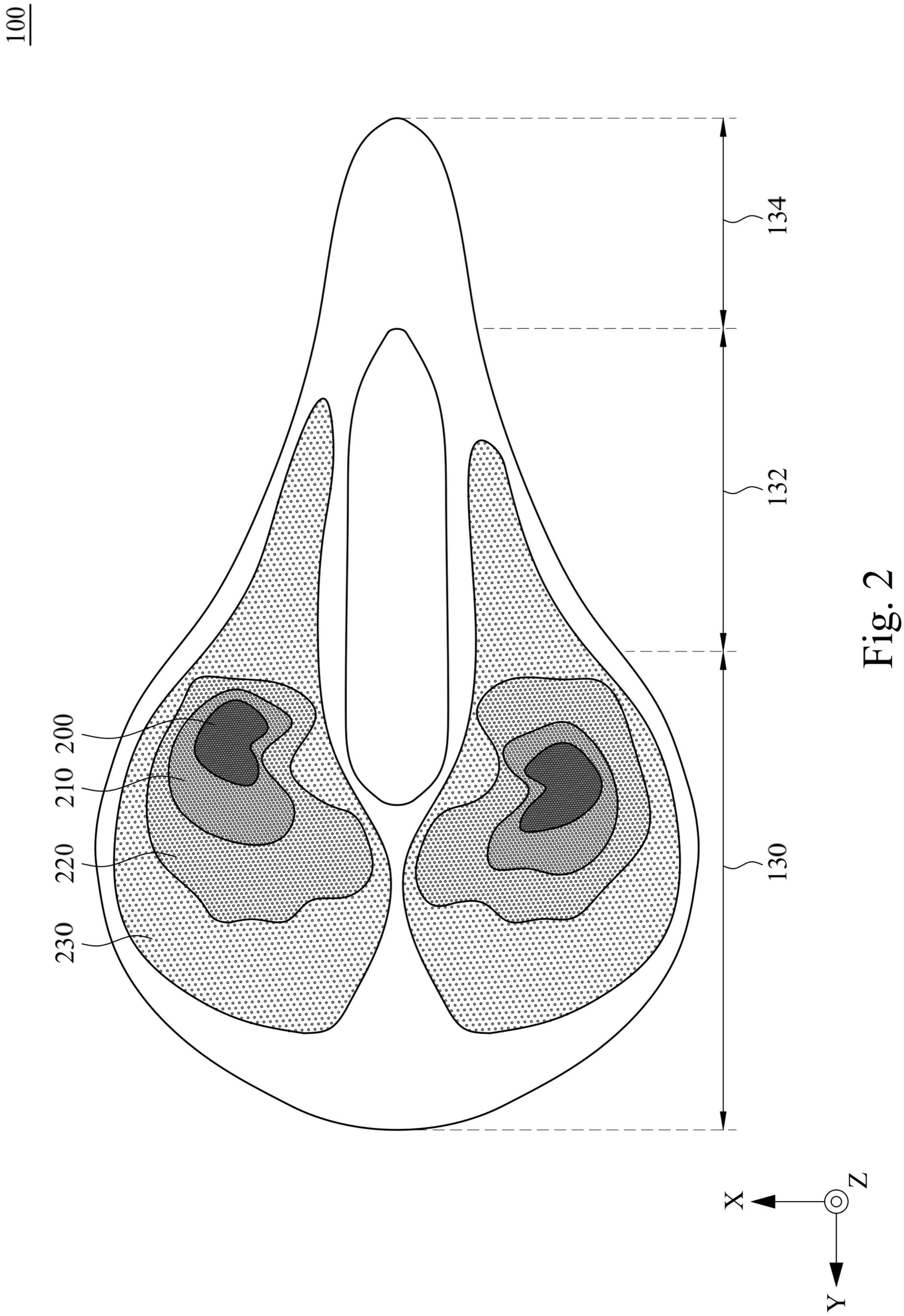


Fig. 2

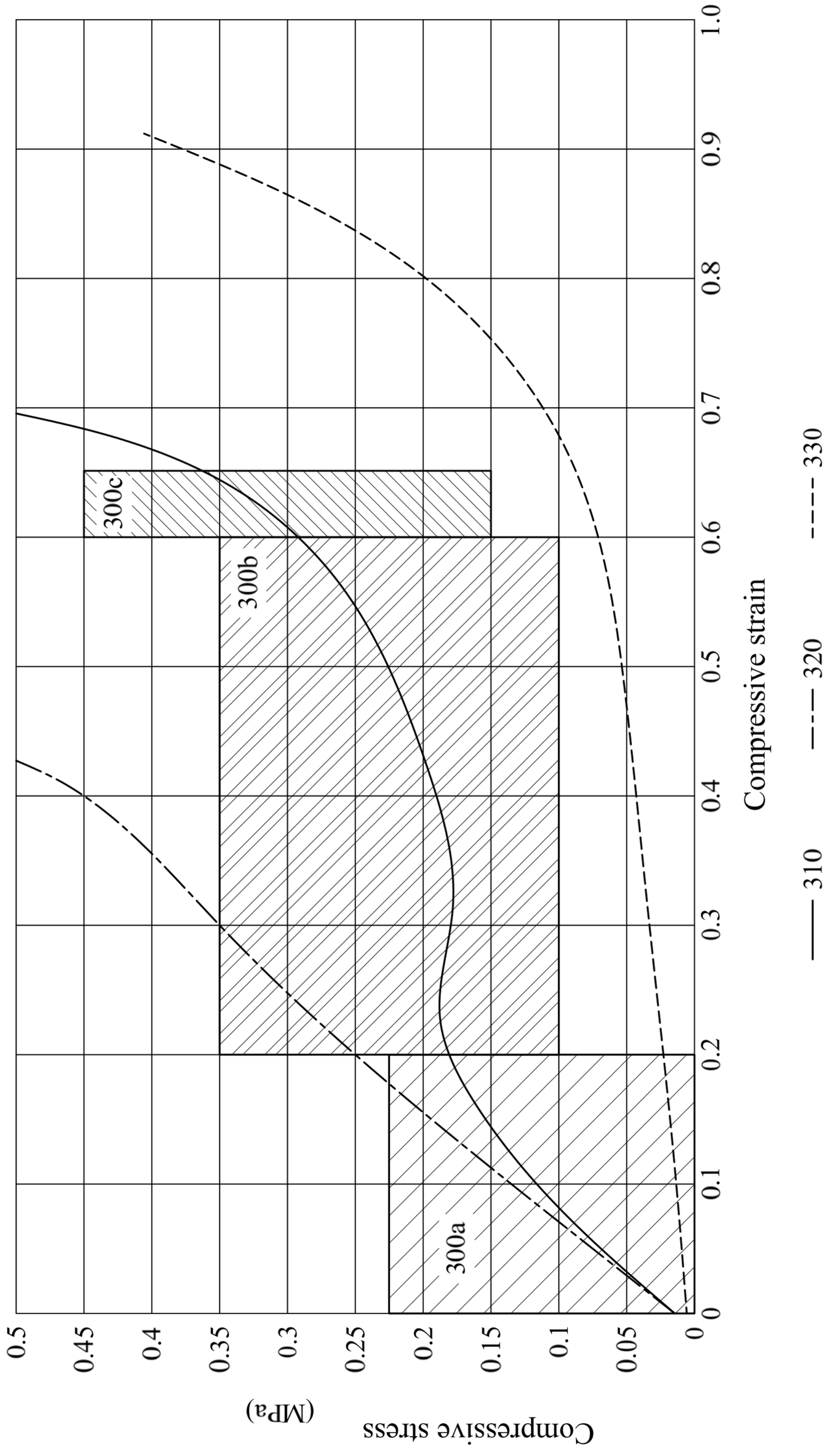
Compressive stress
(MPa)
0.5
0.45
0.4
0.35
0.3
0.25
0.2
0.15
0.1
0.05
0
Compressive strain
0
0.1
0.2
0.3
0.4
0.5
0.6
0.7
0.8
0.9
1.0
300a
300b
300c
310
320
330

Fig. 3

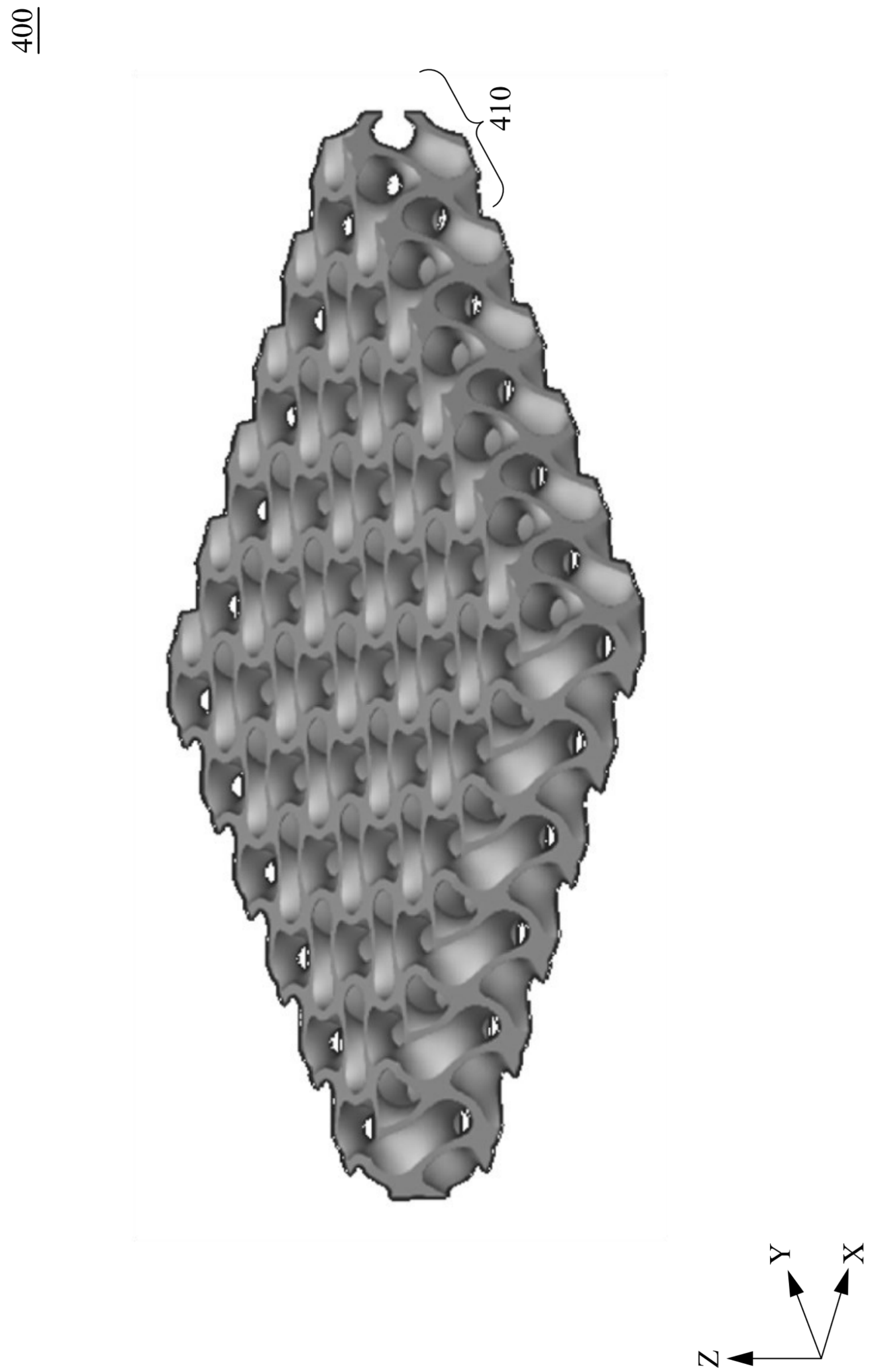


Fig. 4

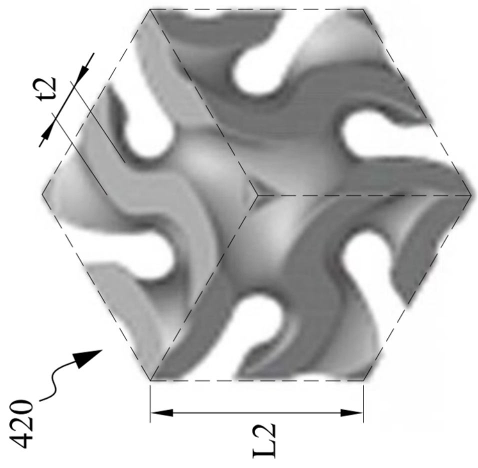


Fig. 6

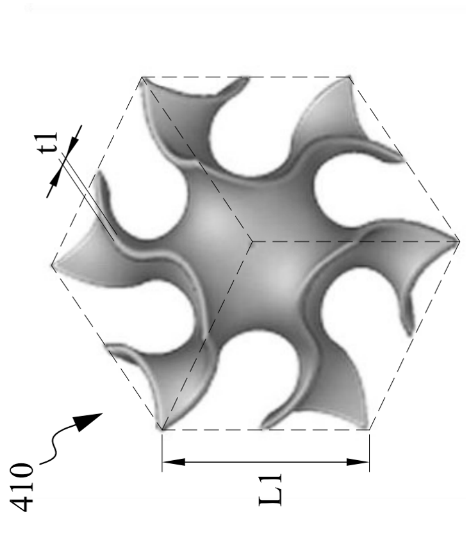


Fig. 5

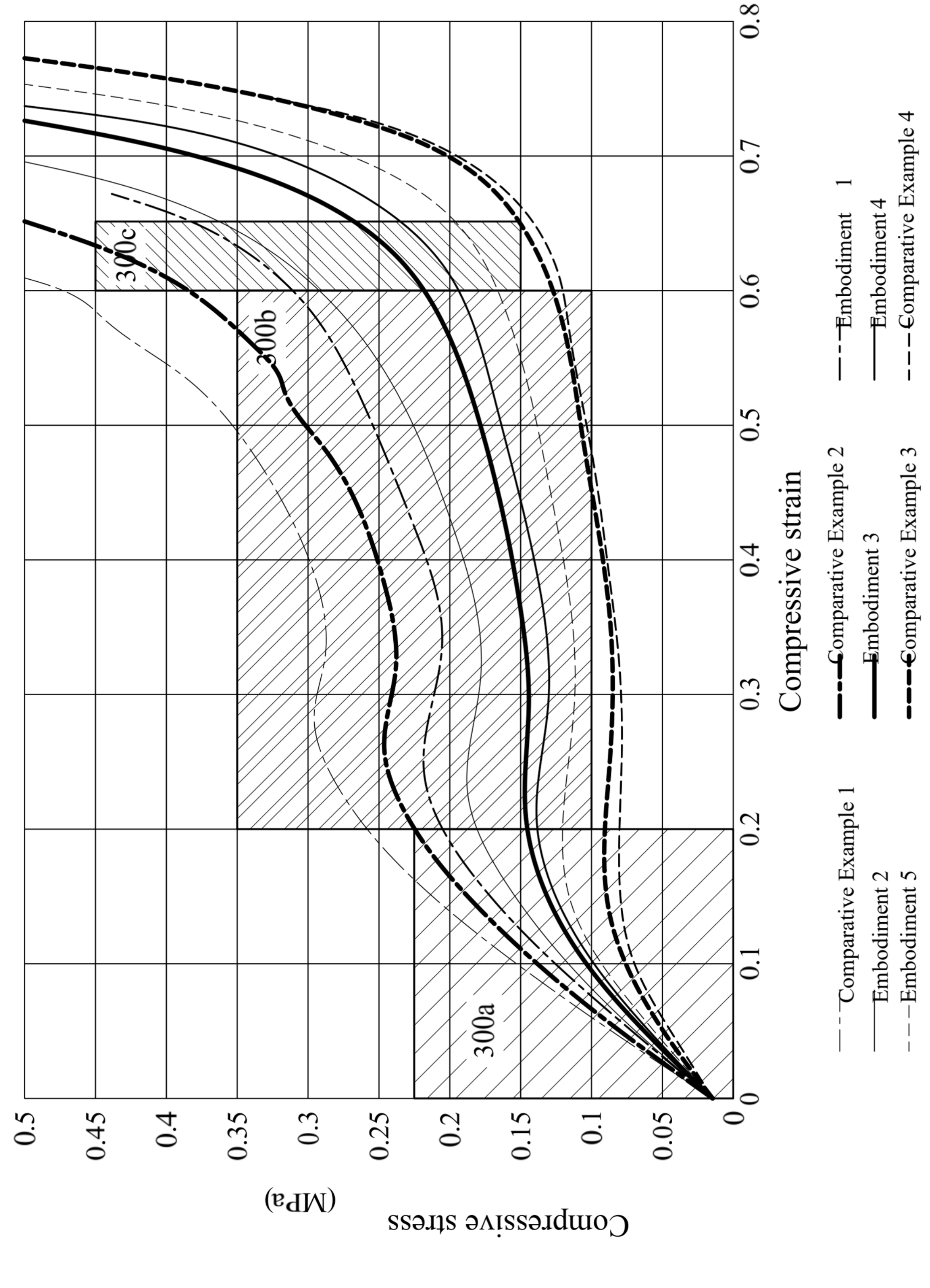
Compressive stress (MPa)
0
0.05
0.1
0.15
0.2
0.25
0.3
0.35
0.4
0.45
0.5
Compressive strain
0
0.1
0.2
0.3
0.4
0.5
0.6
0.7
0.8
300a
300b
300c
Comparative Example 1
Embodiment 2
Embodiment 5
Comparative Example 2
Embodiment 3
Comparative Example 3
Embodiment 1
Embodiment 4
Comparative Example 4

Fig. 7

Europäisches Patentamt
European Patent Office
Office européen des brevets

# EUROPEAN SEARCH REPORT

Application Number
EP 25 20 7180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 12 084 140 B2 (SPECIALIZED BICYCLE COMPONENTS INC [US]) 10 September 2024 (2024-09-10) * column 7, line 63 - column 16, line 46; figures 1-4C * | 1-10 | INV. B62J1/00 B29C64/00 B33Y80/00 |
| X | EP 3 882 115 A1 (TREK BICYCLE CORP [US]) 22 September 2021 (2021-09-22) * paragraph [0037] - paragraph [0046]; figures 3-10B * | 1-10 | |
| X | US 2024/140035 A1 (BIGOLIN BARBARA [IT] ET AL) 2 May 2024 (2024-05-02) * paragraph [0032] - paragraph [0198]; figures 9-14 * | 1-10 | |
| X | JP 2023 140697 A (TOYOTA CENTRAL RES & DEV) 5 October 2023 (2023-10-05) | 1 | |
| A | * the whole document * | 2-10 | |
| X | ZAKI ALOMAR ET AL: "A Review of the Selective Laser Melting Lattice Structures and Their Numerical Models", ADVANCE ENGINEERING MATERIALS, WILEY VCH VERLAG, WEINHEIM, DE, vol. 22, no. 12, 3 September 2020 (2020-09-03), page n/a, XP072861825, ISSN: 1438-1656, DOI: 10.1002/ADEM.202000611 | 1 | TECHNICAL FIELDS SEARCHED (IPC) B62J B33Y B29C B29L |
| A | * the whole document * | 2-10 | |

The present search report has been drawn up for all claims

| Place of search | Date of completion of the search | Examiner |
|---|---|---|
| The Hague | 27 February 2026 | Baeza Félez, Lluís |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 20 7180

This annex lists the patent family members relating to the patent documents cited in the above-mentioned European search report. The members are as contained in the European Patent Office EDP file on
The European Patent Office is in no way liable for these particulars which are merely given for the purpose of information.

27-02-2026

| Patent document cited in search report | Publication date | Patent family member(s) | Publication date |
|---|---|---|---|
| US 12084140 B2 | 10-09-2024 | EP 4003824 A1 | 01-06-2022 |
| | | US 2021024155 A1 | 28-01-2021 |
| | | US 2022212738 A1 | 07-07-2022 |
| | | US 2023264772 A1 | 24-08-2023 |
| | | US 2024208595 A1 | 27-06-2024 |
| | | US 2025108872 A1 | 03-04-2025 |
| | | WO 2021015979 A1 | 28-01-2021 |
| EP 3882115 A1 | 22-09-2021 | EP 3882115 A1 | 22-09-2021 |
| | | US 2021294936 A1 | 23-09-2021 |
| US 2024140035 A1 | 02-05-2024 | AU 2022230060 A1 | 12-10-2023 |
| | | BR 112023017598 A2 | 05-12-2023 |
| | | CA 3212488 A1 | 09-09-2022 |
| | | CN 117177905 A | 05-12-2023 |
| | | DK 4301652 T3 | 15-12-2025 |
| | | EP 4301652 A2 | 10-01-2024 |
| | | ES 3056743 T3 | 24-02-2026 |
| | | JP 2024512321 A | 19-03-2024 |
| | | KR 20230153444 A | 06-11-2023 |
| | | PT 4301652 T | 18-12-2025 |
| | | TW 202248034 A | 16-12-2022 |
| | | US 2024140035 A1 | 02-05-2024 |
| | | WO 2022185262 A2 | 09-09-2022 |
| JP 2023140697 A | 05-10-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202411523848